## Europäisches Patentamt
## European Patent Office
## Office européen des brevets

(11) Veröffentlichungsnummer: **0 166 069**
A1

(12)
# EUROPÄISCHE PATENTANMELDUNG

(21) Anmeldenummer: **84890120.3**

(22) Anmeldetag: **25.06.84**

(51) Int. Cl.⁴: **G 01 K 13/00,** G 01 K 7/00

(43) Veröffentlichungstag der Anmeldung: **02.01.86**
**Patentblatt 86/1**

(84) Benannte Vertragsstaaten: **BE CH DE FR GB LI LU NL SE**

(71) Anmelder: **Frantsits, Werner J., Dipl.-Ing., Boltzmanngasse 11, A-1090 Wien (AT)**

(72) Erfinder: **Frantsits, Werner J., Dipl.-Ing., Boltzmanngasse 11, A-1090 Wien (AT)**

(74) Vertreter: **Beer, Otto, Dipl.-Ing. et al, Lindengasse 8, A-1071 Wien (AT)**

(54) **Vorrichtung zum Messen der Körpertemperatur.**

(57) Bei einer Vorrichtung zum Messen der Körpertemperatur nach der oralen oder rektalen Methode mit einer elektronischen Temperaturmeßeinrichtung, deren Temperatursensor (5) in einem hohl ausgebildeten Sauggummi (3) angeordnet ist, ist die elektronische Schaltung (6), eine Stromquelle und die Digitalanzeige (7) der gemessenen Temperatur im Lippenring (2) des Schnullers (1) angeordnet. Der Temperatursensor (5) ist innerhalb des hohl ausgebildeten Sauggummi (3), im Anschluß an den Lippenring (2) vorgesehen, wobei der Sauggummi (3) mit einem Wärmeübertragungsmedium (9) gefüllt ist.

**Vorrichtung zum Messen der Körpertemperatur**

Die Erfindung betrifft eine Vorrichtung zum Messen der Körpertemperatur nach der oralen oder rektalen Methode mit einer elektronischen Temperaturmeßeinrichtung, deren Temperatursensor in einem hohl ausgebildeten Sauggummi angeordnet ist.

Es ist relativ schwierig und mit herkömmlichen Quecksilberthermometern auch gefährlich, insbesondere bei Kleinkindern die Körpertemperatur zu messen. Bei Kleinkindern und auch bei Tieren bietet sich grundsätzlich nur die orale oder rektale Methode zur Messung der Körpertemperatur an.

Aus der DE-B 27 51 952 ist eine Vorrichtung zum Messen der Körpertemperatur nach der oralen oder rektalen Methode mit einer elektronischen Temperaturmeßeinrichtung, deren Temperatursensor in einem hohl ausgebildeten Sauggummi angeordnet ist, bekannt. Bei dem aus der DE-B 27 51 952 bekannten elektronischen Fieberthermometer ist lediglich der Temperatursensor in den Schnuller integriert, wogegen die übrigen Teile des elektronischen Fieberthermometers in einem vom Schnuller seitlich wegragenden Gehäuse untergebracht sind. Weiters hat bei der DE-B 27 51 952 der Temperatursensor eine Temperaturempfindliche Fläche am Sauger seitlich so angeordnet, daß die temperaturempfindliche Fläche bei normaler Benutzungslage gegen die Zunge weist. Abgesehen von dem Nachteil, daß hiezu Sonderausführungen von Temperatursensoren mit flächig ausgebildeten, temperaturempfindlichen Teilen notwendig sind, bleibt immer das Problem bestehen, daß insbesondere Kleinkinder, für die das elektronische Fieberthermometer ja gedacht ist, dazu neigen, mit dem Schnuller im Mund zu spielen, so daß dieser keine vorbestimmte Lage einnehmen wird, wie es für das elektronische Fieberthermometer nach der DE-B 27 51 952 Voraussetzung ist.

Der Temperatursensor des aus der DE-A 25 29 712 bekannten Fieberthermometers ist als herkömmlicher Quecksilber-Temperatursensor ausgebildet. Da der Sauggummi bei diesem bekannten Fieberthermometer hohl ausgebildet ist, muß daher der Kugelteil des Quecksilberthermometers mit einem Schutzmantel aus starrem Werkstoff umgeben werden, da er sonst beim Zubeißen zerstört werden kann. Dieser Schutzmantel hat zur Folge, daß der Wärmeübergang auf den Kugelteil des Quecksilberthermometers schlecht ist, so daß genaue Messungen - wenn überhaupt - nur nach längerer Zeit erzielbar sind.

In diesem Zusammenhang mit den Nachteilen quecksilbergefüllter Fieberthermometer wird auch auf die Ausführungen in der DE-A 25 29 712 zur Problematik von quecksilbergefüllten Fieberthermometern hingewiesen.

Der Erfindung liegt die Aufgabe zugrunde, die an sich bekannten, mit einer elektronischen Auswerteschaltung und einer Temperatursonde ausgestatteten Thermometer so weiterzubilden, daß sie ohne die geschilderten Nachteile zum Messen der Körpertemperatur nach der oralen oder rektalen Methode für Menschen, insbesondere für Kleinkinder, ebenso verwendbar sind wie für Tiere.

In Lösung dieser Aufgabe zeichnet sich die Vorrichtung zum Messen der Körpertemperatur erfindungsgemäß dadurch aus, daß die elektronische Schaltung, eine Stromquelle und die Digitalanzeige der gemessenen Temperatur im Lippenring des Schnullers angeordnet ist, daß der Temperatursensor innerhalb des hohl ausgebildeten Sauggummi im Anschluß an den Lippenring vorgesehen ist und daß der Sauggummi mit einem physiologisch unbedenklichen Wärmeübertragungsmedium gefüllt ist.

Dadurch, daß der Sauggummi, in dem sich die Temperatursonde befindet, mit einem Wärmeübertragungsmedium gefüllt ist, wird in kurzer Zeit eine genaue Angabe der Temperatur erhalten. Durch die erfindungsgemäß vorgeschlagene Art, wie die Vorrichtung zur Messung der Körpertemperatur mit einem Schnuller kombiniert ist, ergeben sich bei der praktischen Verwendung der erfindungsgemäßen Vorrichtung weder beim Mensch noch beim Tier Schwierigkeiten, wobei auf keine besondere Lage der Vorrichtung bei Ihrer Verwendung geachtet werden muß.

Besonders bewährt hat sich im Rahmen der Erfindung, wenn im Sauggummi als Wärmeübertragungsmedium eine Flüssigkeit, wie beispielsweise Mischungen mehrwertiger Alkohole, Mischungen mehrwertiger Alkohole mit Wasser, oder natürliche und synthetische Öle, wie Olivenöl, Sonnenblumenöl, Myglykol usw., enthalten ist.

Bei erfindungsgemäßen Vorrichtungen, die insbesondere für veterinärmedizinische Zwecke gedacht sind, kann anstelle des flüssigen Wärmeübertragungsmediums auch ein festes Wärmeübertragungsmedium verwendet werden.

Bei einer praktischen Ausführungsform der Erfindung ist die als themperaturabhängiger Widerstand oder als Thermoelement ausgebildete Temperatursonde von einer Hülle aus Metall, Kunststoff oder Gummi umgeben.

Weitere Einzelheiten und Merkmale der Erfindung ergeben sich aus der nachstehenden Beschreibung des in der Zeichnung schematisch wiedergegebenen Ausführungsbeispieles. Es zeigt:

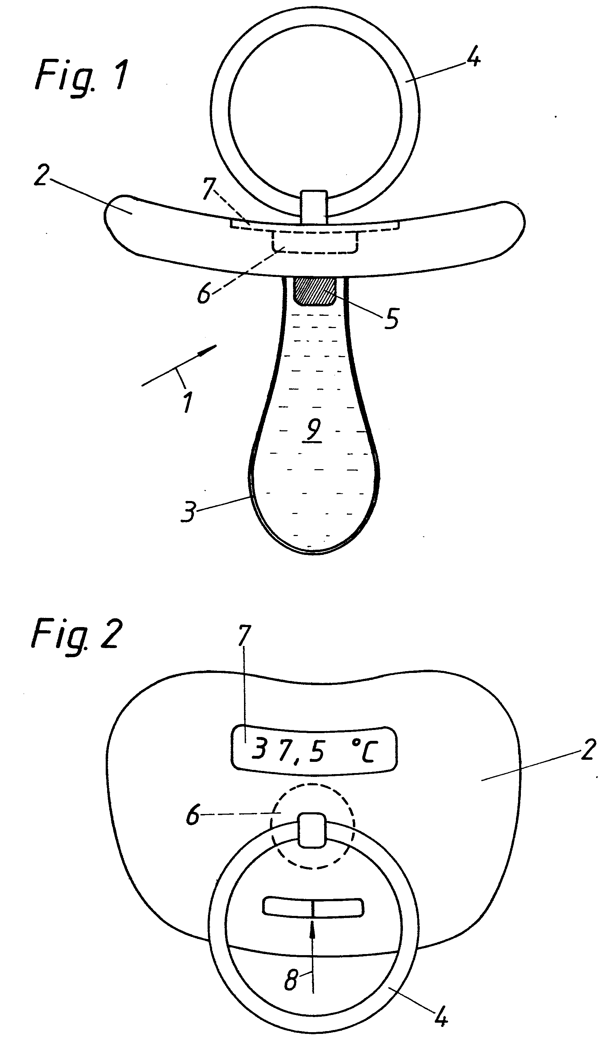

Figur 1 einen Schnuller mit eingebauter Temperaturmeßeinrichtung in Seitenansicht und

Figur 2 den Schnuller aus Figur 1 in Draufsicht.

Der Schnuller 1 kann einen üblichen Aufbau mit Lippenring 2, Sauggummi 3 und Haltering 4 besitzen. Auf der sauggummiseitigen Fläche des Lippenringes 2 ist eine Temperatursonde 5 aufgebaut, die als temperaturabhängiger Widerstand (der elektrische Widerstand ändert sich mit der Temperatur nach spezifischen Kennlinien) oder als Thermoelement (erzeugt Ströme, deren Stärke von der Temperatur abhängt) ausgebildet sein kann. Die Temperatursonde 5 ist ausgangsseitig an eine an sich bekannte elektronische Schaltung angeschlossen, in der die von der Temperatursonde 5 aufgenommenen Werte für die Temperatur in digitale Impulse umgewandelt und einer Digitalanzeige (LCD- oder LED-Anzeige) zugeleitet werden. Sowohl die elektronische Auswerteschaltung 6 als auch die Digitalanzeige 7 sind im Lippenring 2 untergebracht.

Die elektronische Auswertschaltung 6, die in den Lippenring 2 des Schnullers 1 eingebaut ist, kann durch einen Mikroprozessor gesteuert werden. Zur Energieversorgung ist in den Lippenring eine nicht dargestellte Stromquelle, z. B. eine Batterie, eingebaut.

Das Aus- und Einschalten der erfindungsgemäßen Vorrichtung erfolgt mit Hilfe eines mechanischen oder elektronischen Schalters 8, der z. B. als Schleuderschalter, Schiebeschalter oder kapazitativer Schalter ausgebildet sein kann.

Um die Wärmeübertragung vom Sauggummi 3 zur Temperatursonde 5 zu verbessern, ist das Innere des Sauggummis 3 mit einem beispielsweise flüssigen Wärmeübertragungsmedium 9 gefüllt. Als Wärmeübertragungsflüssigkeit sind wegen der physiologischen Unbedenklichkeit Mischungen mehrwertiger Alkohole (z. B. Glycerin, Polypropylenglykol) untereinander und/oder mit Wasser, oder aber auch natürliche und synthetische Öle (z. B. Olivenöl, Sonnenblumenöl, Myglykol) verwendbar.

Die im Inneren des Sauggummis 3 angeordnete und vom Wärmeübertragungsmedium 9 umgebene Temperatursonde 5 kann entweder direkt in das Wärmeübertragungsmedium 9 ragen oder aber in einer Metall- oder Kunststoff- oder Gummihülle, die in das Wärmeübertragungsmedium 9 ragt, eingebaut, z. B. eingelötet oder eingeschweißt sein.

Bei einer besonders für veterinärmedizinische Zwecke bestimmten Ausführungsform kann die Temperatursonde auch in einem saugerähnlich geformten Körper aus Gummi oder Kunststoff eingeschweißt sein. In diesem Fall übernimmt der Werkstoff des Saugers die Funktion des Wärmeübertragungsmediums.

Ansprüche:

1. Vorrichtung zum Messen der Körpertemperatur nach der oralen oder rektalen Methode mit einer elektronischen Temperaturmeßeinrichtung, deren Temperatursensor (5) in einem hohl ausgebildeten Sauggummi (3) angeordnet ist, dadurch gekennzeichnet, daß die elektronische Schaltung (6), eine Stromquelle und die Digitalanzeige (7) der gemessenen Temperatur im Lippenring (2) des Schnullers (1) angeordnet ist, daß der Temperatursensor (5) innerhalb des hohl ausgebildeten Sauggummi (3), im Anschluß an den Lippenring vorgesehen ist und daß der Sauggummi (3) mit einem physiologisch unbedenklichen Wärmeübertragungsmedium (9) gefüllt ist.

2. Vorrichtung nach Anspruch 1, dadurch gekennzeichnet, daß im Sauggummi (3) als Wärmeübertragungsmedium (8) eine Flüssigkeit, wie beispielsweise Mischungen mehrwertiger Alkohole, Mischungen mehrwertiger Alkohole mit Wasser, oder natürliche **und** synthetische Öle, wie Olivenöl, Sonnenblumenöl, Myglykol usw., enthalten ist.

3. Vorrichtung nach Anspruch 1 oder 2, dadurch gekennzeichnet, daß der, wie an sich bekannt, als temperaturabhängiger Widerstand oder als Thermoelement ausgebildete Temperatursensor (5) von einer Hülle aus Metall, Kunststoff oder Gummi umgeben ist.

Fig. 1

0166069

Fig. 2

37,5 °C

Europäisches
Patentamt

**EUROPÄISCHER RECHERCHENBERICHT**

0166069

Nummer der Anmeldung

EP 84 89 0120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | WO-A-8 302 664 (CHRISTOFFERSEN) * Figuren 1,2; Seite 7, Zeile 1 - Seite 8, Zeile 14 * | 1 | G 01 K 13/00 G 01 K 7/00 |
| A | | 3 | |
| | --- | | |
| Y | EP-A-0 087 122 (TRP ENERGY SENSORS) * Figuren 1,2; Seite 3, Zeile 10 - Seite 5, Zeile 3 * | 1,2 | |
| | --- | | |
| A | PATENTS ABSTRACTS OF JAPAN, Band 5, Nr. 96, (P-67)[768], 23. Juni 1981, Seite 14 P67; & JP - A - 56 39 434 (HIRAKI KAWAGUCHI) 15-04-1981 | 1 | |
| | --- | | RECHERCHIERTE SACHGEBIETE (Int. Cl. 3) |
| D,A | DE-A-2 751 952 (ROSENLÖCHER) * Figur 2; Seite 8, Zeilen 12-19 * | 1 | G 01 K 13/00 G 01 K 1/00 G 01 K 7/00 |
| D,A | DE-A-2 529 712 (BLOUIN) * Figuren 1-3; Seite 1, Zusammenfassung * | 1 | A 61 J 17/00 A 61 J 9/00 |
| | ----- | | |

Der vorliegende Recherchenbericht wurde für alle Patentansprüche erstellt.

| Recherchenort DEN HAAG | Abschlußdatum der Recherche 19-10-1984 | Prüfer DRYSDALE N. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82